(19) Europäisches Patentamt
European Patent Office
Office européen des brevets

(11) **EP 4 102 797 A1**

(12) **EUROPEAN PATENT APPLICATION**
published in accordance with Art. 153(4) EPC

(43) Date of publication:
**14.12.2022 Bulletin 2022/50**

(21) Application number: **21764425.1**

(22) Date of filing: **04.03.2021**

(51) International Patent Classification (IPC):
**H04L 29/06** (2006.01)

(52) Cooperative Patent Classification (CPC):
**H04L 43/00; H04L 47/2416; H04L 47/80;
H04L 65/40**

(86) International application number:
**PCT/CN2021/079148**

(87) International publication number:
**WO 2021/175297 (10.09.2021 Gazette 2021/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.03.2020 CN 202010148510**

(71) Applicant: **Huawei Technologies Co., Ltd.
Shenzhen, Guangdong 518129, (CN)**

(72) Inventors:
• **LAN, Wentao**
Shenzhen, Guangdong 518129 (CN)
• **HUANG, Yiwei**
Shenzhen, Guangdong 518129 (CN)
• **TANG, Xu**
Shenzhen, Guangdong 518129 (CN)
• **ZHANG, Lei**
Shenzhen, Guangdong 518129 (CN)

(74) Representative: **Körber, Martin Hans
Mitscherlich PartmbB
Patent- und Rechtsanwälte
Sonnenstraße 33
80331 München (DE)**

(54) **DISTRIBUTED DATA TRANSMISSION METHOD, APPARATUS AND SYSTEM**

(57) This application provides a distributed data transmission method, an apparatus, and a system. When sending RTP data to an output device, an input device determines a delay time of a first output device and a delay time of a second output device based on a device delay control list, and sends the RTP data to the first output device and the second output device based on the delay time of the first output device and the delay time of the second output device, so that times for the first output device and the second output device to output the data are the same. The times for the first output device and the second output device to output the data are controlled, so that the first output device and the second output device can output the data simultaneously. This does not degrade output quality of the output device, and improves user experience.

FIG. 2

## Description

This application claims priority to Chinese Patent Application No. 202010148510.9, filed with the China National Intellectual Property Administration on March 5, 2020 and entitled "DISTRIBUTED DATA TRANSMISSION METHOD, APPARATUS, AND SYSTEM", which is incorporated herein by reference in its entirety.

## TECHNICAL FIELD

This application relates to the communication field, and more specifically, to a distributed data transmission method, an apparatus, and a system.

## BACKGROUND

Currently, audio and videos are played on a plurality of terminals mainly based on a Real-time Transport Protocol (Real-time Transport Protocol, RTP). However, because a delay inevitably occurs in a network transmission process, for the delay in the network transmission process, in the conventional technology, a congestion mechanism GCC and a bandwidth adjustment policy are used to ensure a balance between the delay, quality, and a network speed.

In a future 1+8 application scenario (that is, one input source device and a plurality of output source devices), it is necessary to coordinate and synchronize playing in the plurality of output source devices. Otherwise, playing delays of a plurality of output devices are uncontrollable and phases are asynchronous, resulting in sound interference and affecting visual and audio experience of a user. If the existing congestion mechanism and bandwidth adjustment policy continue to be used, when output synchronization is ensured, output quality of the output source device is reduced, and user experience is affected.

## SUMMARY

This application provides a distributed data transmission method, an apparatus, and a system. When sending RTP data to an output device, an input device determines a delay time of a first output device and a delay time of a second output device based on a device delay control list, and sends the RTP data to the first output device and the second output device based on the delay time of the first output device and the delay time of the second output device, so that times for the first output device and the second output device to output the data are the same. The times for the first output device and the second output device to output the data are controlled, so that the first output device and the second output device can output the data simultaneously. This does not degrade output quality of the output device, and improves user experience.

According to a first aspect, a distributed data transmission method is provided. The method may be performed by an input device or a chip applied to an input device. For example, the method is performed by an input device. The method includes: The input device determines a delay time $T_1$ of a first output device and a delay time $T_2$ of a second output device based on a device delay control list. The device delay control list includes an identifier of an output device and a delay time that is of the output device and that is associated with the identifier of the output device. The input device sends RTP data to the first output device and the second output device based on the $T_1$ and the $T_2$. The RTP data sent to the first output device includes a timestamp indicating when the input device sends the RTP data to the first output device, and the RTP data sent to the second output device includes a timestamp indicating when the input device sends the RTP data to the second output device.

According to the distributed data transmission method provided in the first aspect, when the input device sends the RTP data to the output device, the input device determines a delay time of the first output device and a delay time of the second output device based on the device delay control list. The input device sends the RTP data to the first output device and the second output device based on the delay time of the first output device and the delay time of the second output device. Times for the first output device and the second output device to output the data are controlled, so that the first output device and the second output device can output the data simultaneously. This avoids changing a bit rate and degrading output quality of the output device in the conventional technology to enable the first output device and the second output device to output the data simultaneously. According to the method, output quality of the output device is not degraded, and user experience is improved.

It should be understood that the input device in this application means that the device provides data and sends the data to another device, and the another device plays the data. The input device may be a network device, or may be a terminal device. The output device means that the device receives data and plays the data. The output device may be a terminal device, may be a wearable device, or may be a network device. For example, the input device is a mobile phone, and the output device is respectively a television and a stereo.

With reference to the first aspect, in some implementations of the first aspect, that the input device sends RTP data to the first output device and the second output device based on the $T_1$ and the $T_2$ includes: determining a time difference T between the $T_1$ and the $T_2$ according to a formula (1), where

$$T = T_1 - T_2, T > 0 \qquad (1);$$

and

after sending the RTP data to the first output device, sending the RTP data to the second output device after the time T.

In this implementation, the input device determines the time difference T between the delay time $T_1$ of the first output device and the delay time $T_2$ of the second output device, where T > 0. The input device first sends the RTP data to the first output device first, and after the time T, the input device sends the RTP data to the second output device, so that times for the first output device and the second output device to output the data are the same. The first output device and the second output device separately perform decoding and output the data simultaneously.

With reference to the first aspect, in some implementations of the first aspect, that the input device sends RTP data to the first output device and the second output device based on the $T_1$ and the $T_2$ includes: determining a time difference T between the $T_1$ and the $T_2$ according to a formula (2), where

$$T = T_1 - T_2, T > 0 \qquad (2);$$

and

sending the RTP data to the first output device and the second output device simultaneously, where when the RTP data is sent to the second output device, first indication information is further included. The first indication information is used to indicate the second output device to output the data during the time T after receiving the data.

In this implementation, the input device determines the time difference T between the delay time $T_1$ of the first output device and the delay time $T_2$ of the second output device, where T > 0. The input device sends the RTP data to the first output device and the second output device simultaneously. In addition, when the RTP data is sent to the second output device, the first indication information is further included. The first indication information is used to indicate the second output device to output the data during the time T after receiving the data, so that times for the first output device and the second output device to output the data are the same.

With reference to the first aspect, in some implementations of the first aspect, the method further includes: The input device receives a first Real-time Transport Control Protocol reception report RTCP RR sent by the first output device, where the first RTCP RR includes a first delay time. The input device receives a second Real-time Transport Control Protocol reception report RTCP RR sent by the second output device, where the second RTCP RR includes a second delay time. The input device updates the device delay control list based on the first delay time and the second delay time.

In this implementation, the input device receives the first delay time sent by the first output device, receives the second delay time sent by the second output device, and updates the device delay control list based on the first delay time and the second delay time, so that the input device can dynamically update the delay control list based on the first delay time and the second delay time. Therefore, if delay times of the first output device and the second output device change for a network reason, the input device can adjust the delay control list in time, to ensure that the first output device and the second output device output data simultaneously. In this way, user experience is improved.

With reference to the first aspect, in some implementations of the first aspect, that the input device updates the device delay control list based on the first delay time and the second delay time includes: The input device collects statistics on a plurality of the first delay times and a plurality of the second delay times within a preset time. The input device obtains an average value $\overline{T'}$ of the plurality of the first delay times. The input device obtains an average value $\overline{T''}$ of the plurality of the second delay times. The input device updates, based on the $\overline{T'}$ and the $\overline{T''}$, the delay time $T_1$ of the first output device and the delay time $T_2$ of the second output device that are in the device delay control list.

In this implementation, the input device separately obtains the average value $\overline{T'}$ of the plurality of the first delay times and the average value $\overline{T''}$ of the plurality of the second delay times within the preset time, and updates the delay time $T_1$ of the first output device and the delay time $T_2$ of the second output device that are in the device delay control list based on the $\overline{T'}$ and the $\overline{T''}$. This eliminates jitter of the first delay time and the second delay time, so that the delay time $T_1$ of the first output device and the delay time $T_2$ of the second output device that are in the device delay control list are more accurate.

It should be understood that, in this application, the preset time may be a predefined period of time, such as 1000 ms, to collect statistics on delays of a plurality of RTP data packets within the 1000 ms. Alternatively, the preset time may be a period of time determined based on different applications. For example, during video playback, a first time period may be preset, and duration is 1000 ms. During audio playback, a second time period may be preset, and duration is 500 ms. Alternatively, the preset time may be dynamically set based on playback duration of the application. For example, when the application is started, the preset time is a default time 500 ms in a system. As the application proceeds, the preset time may be increased by duration based on the default time, for example, increased by 500 ms per hour. Alternatively, the preset time may be dynamically changed based on network quality. For example, when the network quality is good, the preset time may be decreased, and when the network quality is poor, the preset time may be increased.

It should be understood that the preset time is not limited in this application, forms of the preset time are all examples, and the preset time may alternatively be implemented in another form.

With reference to the first aspect, in some implementations of the first aspect, that the input device updates the device delay control list based on the first delay time and the second delay time includes: The input device updates, based on the first delay time and the second delay time, the delay time $T_1$ of the first output device and the delay time $T_2$ of the second output device that are in the device delay control list.

With reference to the first aspect, in some implementations of the first aspect, the first delay time is an average value of delay times that are collected by the first output device and that are of a plurality of pieces of data of the first output device within the preset time, and the second delay time is an average value of delay times that are collected by the second output device and that are of a plurality of pieces of data of the second output device within the preset time.

In this implementation, the first delay time that is received by the input device and sent by the first output device is the average value of the delay times that are collected by the first output device within the preset time and that are of the plurality of pieces of data, and the second delay time that is received by the input device and sent by the second output device is the average value of the delay times that are collected by the second output device within the preset time and that are of the plurality of pieces of data. Based on the first delay time and the second delay time, the input device directly updates the delay time $T_1$ of the first output device and the delay time $T_2$ of the second output device that are in the device delay control list without any calculation. Therefore, a calculation resource of the input device is saved.

With reference to the first aspect, in some implementations of the first aspect, the method further includes: The input device obtains an identifier of a third output device, determines a delay time of the third output device, and adds the identifier of the third output device and the delay time of the third output device to the device delay control list.

With reference to the first aspect, in some implementations of the first aspect, the method further includes: The input device deletes the identifier of the third output device and the delay time of the third output device from the device delay control list when the third output device disconnects from the input device.

Therefore, the input device may dynamically update the device delay control list based on whether the input device is connected to the output device, to avoid occupying a storage resource of the output device.

According to a second aspect, a distributed data transmission method is provided. The method may be performed by an output device or a chip applied to an output device. For example, the method is performed by an output device. The method includes: receiving RTP data sent by a first input device; determining a first delay time based on the RTP data; and sending a first Real-time Transport Control Protocol reception report RTCP RR to the first input device, where the first RTCP RR includes the first delay time, and the first delay time is used for the first input device to determine a time for sending RTP data to the first output device.

With reference to the second aspect, in some implementations of the second aspect, the method further includes: determining the first delay time. The determining the first delay time includes: collecting statistics on delay times of a plurality of pieces of data of the first output device within a preset time; and obtaining an average value of the delay times of the plurality of pieces of data, to obtain the first delay time.

The output device collects statistics on the delay times of the plurality of pieces of data of the first output device within the preset time, and obtains the average value of the delay times of the plurality of pieces of data, to obtain the first delay time. This eliminates jitter of the first delay time, so that the first delay time sent to the input device is more accurate, and accuracy of the delay time $T_1$ of the first output device in the device delay control list is improved.

With reference to the second aspect, in some implementations of the second aspect, the method further includes: receiving the data and first indication information that are sent by the input device, where the first indication information is used to indicate the second output device to output the data during a time T after receiving the data; and outputting the data after the time T.

According to a third aspect, an input device is provided. The input device includes: a processor, configured to determine a delay time $T_1$ of a first output device and a delay time $T_2$ of a second output device based on a device delay control list, where the device delay control list includes an identifier of an output device and a delay time that is of the output device and that is associated with the identifier of the output device; and a transceiver, configured to send RTP data to the first output device and the second output device based on the $T_1$ and the $T_2$, where the RTP data sent to the first output device includes a timestamp indicating when the input device sends the RTP data to the first output device, and the RTP data sent to the second output device includes a timestamp indicating when the input device sends the RTP data to the second output device.

With reference to the third aspect, in some implementations of the third aspect, the transceiver is specifically configured to: determine a time difference T between the $T_1$ and the $T_2$ according to a formula (3), where

$$T = T_1 - T_2, T > 0 \qquad (3);$$

and
after sending the RTP data to the first output device, send the RTP data to the second output device after the time T.

With reference to the third aspect, in some implementations of the third aspect, the transceiver is specifically configured to: determine a time difference T between the $T_1$ and the $T_2$ according to a formula (4), where

$$T = T_1 - T_2, T > 0 \qquad (4);$$

and
send the RTP data to the first output device and the second output device simultaneously, where when the RTP data is sent to the second output device, first indication information is further included. The first indication information is used to indicate the second output device to output the data during the time T after receiving the data.

With reference to the third aspect, in some implementations of the third aspect, the transceiver is further configured to receive a first Real-time Transport Control Protocol reception report RTCP RR sent by the first output device, where the first RTCP RR includes a first delay time; and receive a second Real-time Transport Control Protocol reception report RTCP RR sent by the second output device, where the second RTCP RR includes a second delay time. The processor is further configured to update the device delay control list based on the first delay time and the second delay time.

With reference to the third aspect, in some implementations of the third aspect, the processor is specifically configured to: collect statistics on a plurality of the first delay times and a plurality of the second delay times within a preset time; obtain an average value $\overline{T}'$ of the plurality of the first delay times; obtain an average value $\overline{T}''$ of the plurality of the second delay times; and update the delay time $T_1$ of the first output device and the delay time $T_2$ of the second output device that are in the device delay control list based on the $\overline{T}'$ and the $\overline{T}''$.

With reference to the third aspect, in some implementations of the third aspect, the processor is specifically configured to update the delay time $T_1$ of the first output device and the delay time $T_2$ of the second output device that are in the device delay control list based on the first delay time and the second delay time.

With reference to the third aspect, in some implementations of the third aspect, the first delay time is an average value of delay times that are collected by the first output device and that are of a plurality of pieces of data of the first output device within the preset time, and the second delay time is an average value of delay times that are collected by the second output device and that are of a plurality of pieces of data of the second output device within the preset time.

With reference to the third aspect, in some implementations of the third aspect, the processor is further configured to: obtain an identifier of a third output device; determine a delay time of the third output device; and add the identifier of the third output device and the delay time of the third output device to the device delay control list.

According to a fourth aspect, an output device is provided. The output device includes: a transceiver, configured to receive data sent by a first input device. The transceiver is further configured to send a first Real-time Transport Control Protocol reception report RTCP RR to the first input device, where the first RTCP RR includes a first delay time, and the first delay time is used for the first input device to determine a time for sending RTP data to the first output device.

With reference to the fourth aspect, in some implementations of the fourth aspect, the output device further includes a processor. The processor is configured to determine the first delay time. The processor is specifically configured to: collect statistics on delay times of a plurality of pieces of data of the first output device within a preset time; and obtain an average value of the delay times of the plurality of pieces of data, to obtain the first delay time.

With reference to the fourth aspect, in some implementations of the fourth aspect, the transceiver is further configured to receive the data and first indication information that are sent by the input device, where the first indication information is used to indicate the second output device to output the data during a time T after receiving the data. The transceiver outputs the data after the time T.

According to a fifth aspect, an input device is provided. The apparatus includes units configured to perform steps in the first aspect or any possible implementation of the first aspect.

According to a sixth aspect, an output device is provided. The apparatus includes units configured to perform steps in the second aspect or any possible implementation of the second aspect.

According to a seventh aspect, an input device is provided. The apparatus includes at least one processor and a memory, and the at least one processor is configured to perform the method in the first aspect or any possible implementation of the first aspect.

According to an eighth aspect, an output device is provided. The apparatus includes at least one processor and a memory, and the at least one processor is configured to perform the method in the second aspect or any possible implementation of the second aspect.

According to a ninth aspect, an input device is provided. The apparatus includes at least one processor and an interface circuit, and the at least one processor is configured to perform the method in the first aspect or any possible implementation of the first aspect.

According to a tenth aspect, an output device is provided. The apparatus includes at least one processor and an interface circuit, and the at least one processor is configured to perform the method in the second aspect or any possible implementation of the second aspect.

According to an eleventh aspect, a computer program product is provided. The computer program product includes a computer program. When being executed by a processor, the computer program is used to perform the method in the first aspect or any possible implementation of the first aspect, or perform the method in the second aspect or any possible implementation of the second aspect.

According to a twelfth aspect, a computer-readable storage medium is provided. The computer-readable storage medium stores a computer program. When the computer program is executed, the method in the first aspect or any possible implementation of the first aspect, or the method in the second aspect or any possible implementation of the second aspect is performed.

According to a thirteenth aspect, a system is provided. The system includes the foregoing input device and the foregoing output device.

According to a fourteenth aspect, a chip is provided. The chip includes a processor, configured to invoke a computer program from a memory and run the computer program, so that a communication device on which the chip is installed performs the method in the first aspect or any possible implementation of the first aspect, or the method in the second aspect or any possible implementation of the second aspect.

**BRIEF DESCRIPTION OF DRAWINGS**

FIG. 1 is a schematic diagram of an architecture of a communication system applicable to an embodiment of this application;
FIG. 2 is a schematic interaction diagram of a distributed data transmission method 200 according to an embodiment of this application;
FIG. 3 is a schematic interaction diagram of a distributed data transmission method 300 according to an embodiment of this application;
FIG. 4 is a block diagram of delay management of a distributed device;
FIG. 5 is a schematic block diagram of an input device according to an embodiment of this application;
FIG. 6 is a schematic block diagram of an output device according to an embodiment of this application; and
FIG. 7 is a schematic block diagram of a communication device according to an embodiment of this application.

**DESCRIPTION OF EMBODIMENTS**

The following describes technical solutions of this application with reference to the accompanying drawings.

Currently, audio and videos are played on a plurality of terminals mainly based on a Real-time Transport Protocol (Real-time Transport Protocol, RTP). However, because a delay inevitably occurs in a network transmission process, for the delay in the network transmission process, in the conventional technology, a congestion mechanism GCC and a bandwidth adjustment policy are used to ensure a balance between the delay, quality, and a network speed.

Currently, it is relatively simple to play audio and videos on a plurality of terminals. There is one input source device and one output source device. However, in a future 1+8 application scenario (that is, one input source device and a plurality of output source devices), it is necessary to coordinate and synchronize playing in the plurality of output source devices. Otherwise, playing delays of a plurality of output devices is uncontrollable and phases are asynchronous, resulting in sound interference, or audio and videos are asynchronous, affecting visual and audio experience of a user. If the existing congestion mechanism and bandwidth adjustment policy continue to be used, when output synchronization is ensured, output quality of the output source device is reduced, and user experience is affected.

In view of this, this application provides a distributed data transmission method. When sending RTP data to an output device, an input device determines a delay time of a first output device and a delay time of a second output device based on a device delay control list, and sends the RTP data to the first output device and the second output device based on the delay time of the first output device and the delay time of the second output device, so that times for the first output device and the second output device to output the data are the same. The times for the first output device and the second output device to output the data are controlled, so that the first output device and the second output device can output the data simultaneously. This does not degrade output quality of the output device, and improves user experience.

The technical solutions of embodiments of this application may be applied to various communication systems, such as a global system for mobile communication (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunication system (Universal Mobile Telecommunication System, UMTS), a worldwide interoperability for microwave access (Worldwide Interoperability for Microwave Access, WiMAX) communication system, a future 5th generation (5th Generation, 5G) system, or a new radio (New Radio, NR) system. In the foregoing systems, a data transmission method between devices involves a network seven-layer protocol, which is also referred to as an OSI model. The OSI model is an open communication systems interconnection reference model. This model defines standards of interconnection between different computers, and is a basic framework for designing and describing computer network communication. The network seven-layer protocol is separately a physical layer, a data link layer, a network layer, a transport layer, a session layer, a presentation layer, and an application layer. The technical solutions in embodiments of this application relate to a change in the transport layer. Therefore, the technical solutions in embodiments of this application may be applied to the foregoing communication systems.

The input device and the output device in embodiments of this application are merely used to describe introduced definitions, and do not constitute any limitation on this application. The input device means that the device provides data and sends the data to another device, and the another device plays the data. The input device may be a network device, or may be a terminal device. The output device means that the device receives data and plays the data. The output device may be a network device, may be a terminal device, or may be a wearable device. For example, the input device is a mobile phone, and the output device is respectively a television and a stereo.

A terminal device in embodiments of this application may be user equipment, an access terminal, a subscriber unit, a subscriber station, a mobile station, a mobile console, a remote station, a remote terminal, a mobile device, a user terminal, a terminal, a wireless communication device, a user agent, or a user apparatus. The terminal device may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a smart television, a stereo, a terminal device in a future 5G network, or a terminal device in a future evolved public land mobile network (Public Land Mobile Network, PLMN). This is not limited in embodiments of this application.

A network device in embodiments of this application may be a device used to communicate with the terminal device. The network device may be a base transceiver station (base transceiver station, BTS) in a global system for mobile communication (Global System of Mobile communication, GSM) or a code division multiple access (Code Division Multiple Access, CDMA) system; may be a NodeB (NodeB, NB) in a wideband code division multiple access (Wideband Code Division Multiple Access, WCDMA) system; may be an evolved NodeB (Evolutional NodeB, eNB or eNodeB) in an LTE system; or may be a radio controller in a cloud radio access network (Cloud Radio Access Network, CRAN) scenario. Alternatively, the network device may be a relay station, an access point, a vehicle-mounted device, a wearable device, a network device in a future 5G network, a network device in a future evolved PLMN network or another type of future communication system, or the like. This is not limited in embodiments of this application.

In embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine readable media" may include but is not limited to a radio channel, and various other media that can store, contain and/or carry instructions and/or data.

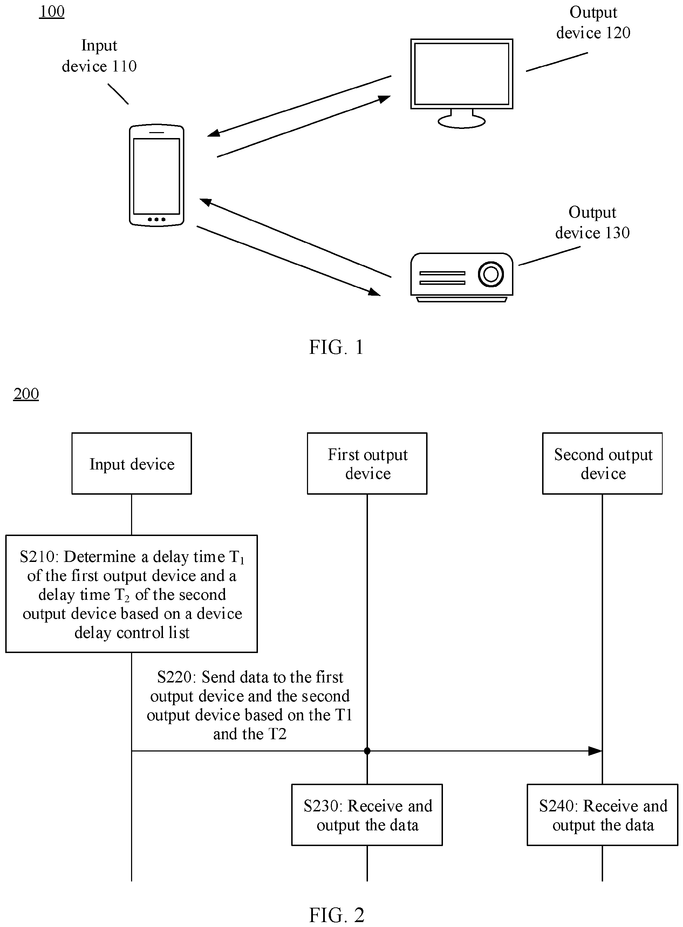

For ease of understanding embodiments of this application, a communication system applicable to embodiments of this application is first briefly described with reference to FIG. 1.

FIG. 1 is a schematic diagram of an architecture of a communication system 100 applicable to a resource request method according to an embodiment of this application. As shown in FIG. 1, the communication system 100 includes three communication devices, for example, an input device 110, an output device 120, and an output device 130. Data communication may be performed between the input device 110 and the output device 120, and between the input device 110 and the output device 130. When sending data to the output device 120 and the output device 130, the input device 110 may transmit data by using a distributed data transmission method in embodiments of this application.

It should be understood that the communication system shown in FIG. 1 may further include more network nodes, for example, terminal devices or network devices. The network devices or the terminal devices included in the communication system shown in FIG. 1 may be the network devices or the terminal devices in the foregoing various forms. These are not shown one by one in the figure in embodiments of this application.

The following describes in detail a distributed data transmission method provided in this application with reference to FIG. 2. FIG. 2 is a schematic interaction diagram of a distributed data transmission method 200 according to an embodiment of this application. The method 200 may be applied to the scenario shown in FIG. 1, and certainly may also be applied to another communication scenario. This is not limited in this embodiment of this application.

It should be further understood that in this embodiment of this application, the method is described by using an example in which the method is performed by an input device and an output device. By way of example, and not limitation, the method may alternatively be performed by a chip, a chip system, a processor, or the like applied to an input device and an output device.

It should be further understood that the input device may be the foregoing network device or the foregoing terminal device, and the output device may be the foregoing network device or the foregoing terminal device.

As shown in FIG. 2, the method 200 shown in FIG. 2 may include S210 to S230. The steps in the method 200 are described in detail below with reference to FIG. 2.

S210: The input device determines a delay time $T_1$ of a first output device and a delay time $T_2$ of a second output device based on a device delay control list, where the device delay control list includes an identifier of an output device and a delay time that is of the output device and that is associated with the identifier of the output device.

S220: The input device sends RTP data to the first output device and the second output device based on the $T_1$ and the $T_2$, where the RTP data sent to the first output device includes a timestamp indicating when the input device sends the RTP data to the first output device, and the RTP data sent to the second output device includes a timestamp indicating when the input device sends the RTP data to the second output device.

S230: The first output device receives and plays the data.

S240: The second output device receives and plays the data.

According to the distributed data transmission method provided in this embodiment of this application, when the input device sends the RTP data to the output device, the input device determines the delay time of the first output device and the delay time of the second output device based on the device delay control list. The input device sends the RTP data to the first output device and the second output device based on the delay time of the first output device and the delay time of the second output device. Times for the first output device and the second output device to output the data are controlled, so that the first output device and the second output device can output the data simultaneously. This does not degrade output quality of the output device, and improves user experience.

Optionally, the device delay control list is used by the input device to determine the delay time $T_1$ of the first output device and the delay time $T_2$ of the second output device. The device delay control list may be a table, may be a data structure, or may be a group of data associated with a plurality of output devices. The device delay control list is only one of the representation forms.

It should be understood that, in the step S220, the RTP data sent by the input device to the first output device may be the same as or different from the RTP data sent by the input device to the second output device. For example, when a user plays music on different devices, the input device is a mobile phone, the first output device is a Bluetooth headset, the second output device is a stereo, and the mobile phone is separately connected to the Bluetooth and the stereo. In this case, RTP data sent by the user to the Bluetooth and RTP data sent by the user to the stereo by using the mobile phone are the same, that is, both are song audio streams. When the user wants to watch a video, the mobile phone is separately connected to a smart television and the stereo, the input device is the mobile phone, the first output device is the smart television, and the second output device is the stereo. In this case, RTP data sent by the mobile phone to the smart television is a video stream, and RTP data sent by the mobile phone to the stereo is an audio stream. That is, based on different application scenarios, the RTP data may be audio data, or may be video data.

Optionally, that the input device sends the RTP data to the first output device and the second output device based on the $T_1$ and the $T_2$ includes: determining a time difference T between the $T_1$ and the $T_2$ according to a formula (1), where

$$T = T_1 - T_2, T > 0 \qquad\qquad (1);$$

and

after sending the RTP data to the first output device, sending the RTP data to the second output device after the time T.

In this implementation, the input device determines the time difference T between the delay time $T_1$ of the first output device and the delay time $T_2$ of the second output device, where T > 0. The input device first sends the RTP data to the first output device, and after the time T, the input device sends the RTP data to the second output device, so that times for the first output device and the second output device to receive the data are the same. The first output device and the second output device separately perform decoding and output the data simultaneously.

Specifically, for example, the mobile phone is separately connected to the smart television and the stereo. The input device is the mobile phone, the first output device is the smart television, and the second output device is the stereo. A structure linked list is generated on the mobile phone. The structure linked list is the device delay control list, and is displayed as follows:

Stract vicesNode{

DeviceID;

DelayTime;

Stract devicesNode * Next;

};

| television: | stereo: |
|---|---|
| Device ID = 1 | Device ID = 1 |
| Delay Time = 2 ms | Delay Time = 1 ms |

When an RTP data stream is played on the mobile phone, the mobile phone sends video data to the television first, and then sends audio data to the stereo after a delay of 1 ms, so that the stereo plays audio while the television plays a video.

Optionally, that the input device sends the RTP data to the first output device and the second output device based on the $T_1$ and the $T_2$ includes: determining a time difference T between the $T_1$ and the $T_2$ according to a formula (2), where

$$T = T_1 - T_2, T > 0 \qquad\qquad (2);$$

and

sending the RTP data to the first output device and the second output device simultaneously, where when the RTP data is sent to the second output device, first indication information is further included. The first indication information is used to indicate the second output device to output the data during the time T after receiving the data.

In this implementation, the input device determines the time difference T between the delay time $T_1$ of the first output device and the delay time $T_2$ of the second output device, where T > 0. The input device sends the RTP data to the first output device and the second output device simultaneously. In addition, when the RTP data is sent to the second output device, the first indication information is further included. The first indication information is used to indicate the second output device to output the data during the time T after receiving the data, so that times for the first output device and the second output device to output the data are the same.

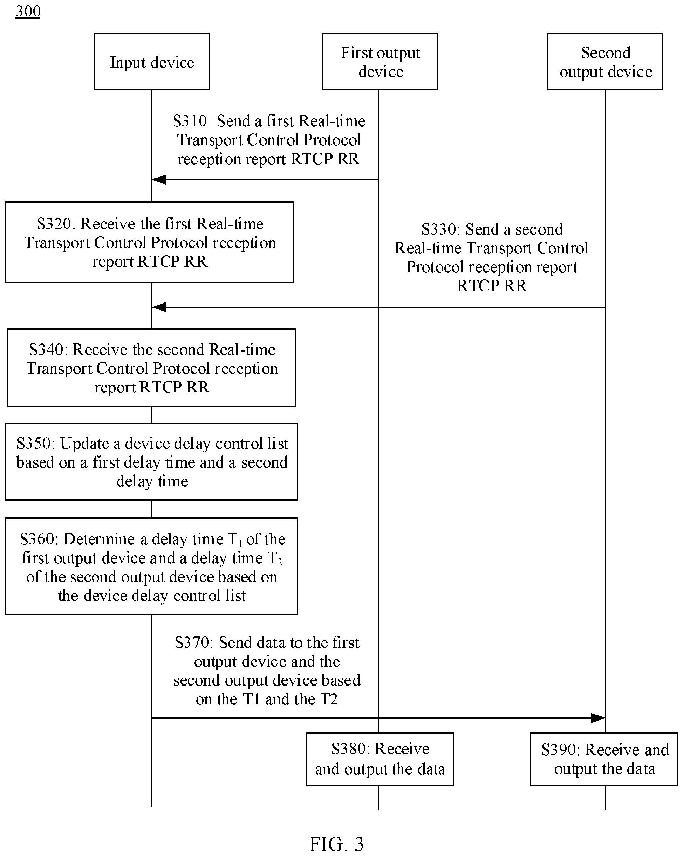

The following describes in detail a distributed data transmission method provided in this application with reference to FIG. 3. FIG. 3 is a schematic interaction diagram of a distributed data transmission method 300 according to an embodiment of this application. The method 300 may be applied to the scenario shown in FIG. 1, and certainly may also be applied to another communication scenario. This is not limited in this embodiment of this application.

It should be further understood that in this embodiment of this application, the method is described by using an example in which the method is performed by an input device and an output device. By way of example, and not limitation, the method may alternatively be performed by a chip, a chip system, a processor, or the like applied to an input device and an output device.

It should be further understood that the input device may be the foregoing network device or the foregoing terminal device, and the output device may be the foregoing network device or the foregoing terminal device.

As shown in FIG. 3, the method 300 shown in FIG. 3 may include S310 to S380. The following describes in detail the steps in the method 200 with reference to FIG. 3.

S310: The first output device sends a first Real-time Transport Control Protocol reception report RTCP RR to the input device, where the first RTCP RR includes a first delay time.

S320: The input device receives the first Real-time Transport Control Protocol reception report RTCP sent by the first output device.

S330: The second output device sends a second Real-time Transport Control Protocol reception report RTCP RR to the input device, where the second RTCP RR includes a second delay time.

S340: The input device receives the second Real-time Transport Control Protocol reception report RTCP sent by the second output device.

S350: The input device updates the device delay control list based on the first delay time and the second delay time.

S360: The input device determines the delay time $T_1$ of the first output device and the delay time $T_2$ of the second output device based on the device delay control list, where the device delay control list includes the identifier of the output device and the delay time that is of the output device and that is associated with the identifier of the output device.

S370: The input device sends the RTP data to the first output device and the second output device based on the $T_1$ and the $T_2$, so that the times for the first output device and the second output device to output the data are the same.

S380: The first output device receives and plays the data.

S390: The second output device receives and plays the data.

In the step S310, before the first output device sends the first Real-time Transport Control Protocol reception report RTCP RR to the input device, the first output device needs to determine the first delay time based on an RTP data packet sent by the input device to the first output device. The RTP data packet includes a timestamp of the RTP data packet sent by the input device to the first output device. The first output device determines the first delay time based on a time for receiving the RTP packet and the timestamp of the RTP data packet sent by the input device to the first output device.

It should be understood that, for a method for determining the second delay time by the second output device, refer to the foregoing method for determining the first delay time by the first output device. Details are not described herein again.

It should be further understood that the Real-time Transport Control Protocol reception report RTCP RR sent by the output device to the input device is a data response packet sent to the input device, and the response packet is sent when the output device receives the RTP data.

It should be understood that in this embodiment of this application, that the output devices are the first output device and the second output device is merely used as an example. The input device may be connected to a plurality of output devices.

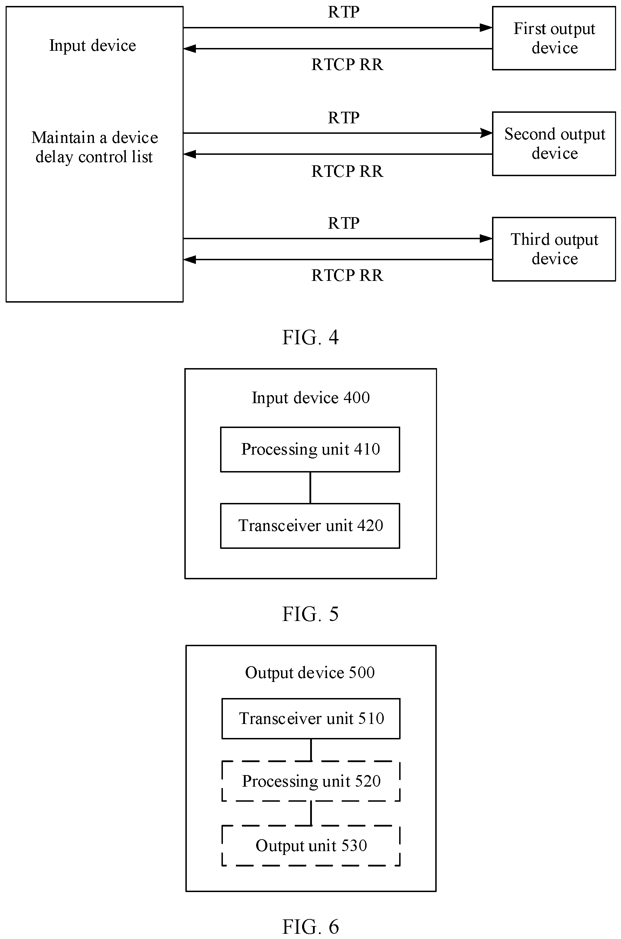

The following describes an embodiment of this application by using three output devices as an example. FIG. 4 is a block diagram of delay management of a distributed device. As shown in FIG. 4, there is an input device, a first output device, a second output device, and a third output device. The input device needs to simultaneously output a segment of audio data on the first output device, the second output device, and the third output device. The input device sends an RTP data packet to the first output device, the second output device, and the third output device. The data packet includes a time for the input device to send the data packet. When receiving the data packet respectively, the first output device, the second output device, and the third output device determine a delay time of the data packet based on a time for receiving the data packet, and send an RTCP RR packet to the input device. The input device updates the device delay control list on the input device based on the received RTCP RR packet.

It should be understood that the RTP data packet sent by the input device to the first output device, the second output device, and the third output device may be a test packet, or may be a data packet of a previous task. This is not limited in this application.

It should be further understood that, in the RTCP RR packet in this application, a data delay delta-delay field is added to an original RTCP RR packet format, and the original packet format is not changed.

In this implementation, the input device receives the first delay time sent by the first output device, receives the second delay time sent by the second output device, and updates the device delay control list based on the first delay time and the second delay time, so that the input device can dynamically update the delay control list based on the first delay time and the second delay time. Therefore, if delay times of the first output device and the second output device change for a network reason, the input device can adjust the delay control list in time, to ensure that the first output device and the second output device output data simultaneously. In this way, user experience is improved.

Optionally, that the input device updates the device delay control list based on the first delay time and the second delay time includes: The input device collects statistics on a plurality of the first delay times and a plurality of the second delay times within a preset time. The input device obtains an average value $\overline{T}'$ of the plurality of the first delay times. The input device obtains an average value $\overline{T}''$ of the plurality of the second delay times. The input device updates, based on the $\overline{T}'$ and the $\overline{T}''$, the delay time $T_1$ of the first output device and the delay time $T_2$ of the second output device that are in the device delay control list.

In this implementation, the input device separately obtains the average value $\overline{T}'$ of the plurality of the first delay times and the average value $\overline{T}''$ of the plurality of the second delay times within the preset time, and updates, based on the $\overline{T}'$ and the $\overline{T}''$, the delay time $T_1$ of the first output device and the delay time $T_2$ of the second output device that are in the device delay control list. This eliminates jitter of the first delay time and the second delay time, so that the delay time $T_1$ of the first output device and the delay time $T_2$ of the second output device that are in the device delay control list are more accurate.

It should be understood that, in this application, the preset time may be a predefined period of time, such as 1000 ms, to collect statistics on delays of a plurality of RTP data packets within the 1000 ms. Alternatively, the preset time may be a period of time determined based on different applications. For example, during video playback, a first time may be preset, and duration is 1000 ms. During audio playback, a second time may be preset, and duration is 500 ms. Alternatively, the preset time may be dynamically set based on playback duration of the application. For example, when the application is started, the preset time is a default time 500 ms in a system. As the application proceeds, the preset time may be increased by duration based on the default time, for example, increased by 500 ms per hour. Alternatively, the preset time may be dynamically changed based on network quality. For example, when the network quality is good, the preset time may be decreased, and when the network quality is poor, the preset time may be increased.

It should be understood that the preset time is not limited in this application, forms of the preset time are all examples, and the preset time may alternatively be implemented in another form.

Optionally, that the input device updates the device delay control list based on the first delay time and the second delay time includes: The input device updates, based on the first delay time and the second delay time, the delay time $T_1$ of the first output device and the delay time $T_2$ of the second output device that are in the device delay control list.

Optionally, the first delay time is an average value of delay times that are collected by the first output device and that are of a plurality of pieces of data of the first output device within the preset time, and the second delay time is an average value of delay times that are collected by the second output device and that are of a plurality of pieces of data of the second output device within the preset time.

In this implementation, the input device and the output device may agree on in advance that after the preset time expires, the input device updates the device delay control list based on the first delay time sent by the first output device and the second delay time sent by the second output device. The input device does not update the device delay control list within the preset time again.

The first delay time that is received by the input device and sent by the first output device is the average value of the delay times that are collected by the first output device within the preset time and that are of the plurality of pieces of data, and the second delay time that is received by the input device and sent by the second output device is the average value of the delay times that are collected by the second output device within the preset time and that are of the plurality of pieces of data. Based on the first delay time and the second delay time, the input device directly updates the delay time $T_1$ of the first output device and the delay time $T_2$ of the second output device that are in the device delay control list without any calculation. Therefore, a calculation resource of the input device is saved.

Optionally, the method further includes: The first output device determines the first delay time. The determining the first delay time includes: collecting statistics on delay times of a plurality of pieces of data of the first output device within the preset time; and obtaining an average value of the delay times of the plurality of pieces of data, to obtain the first delay time.

The output device collects statistics on the delay times of the plurality of pieces of data of the first output device within the preset time, and obtains the average value of the delay times of the plurality of pieces of data, to obtain the first delay time. This eliminates jitter of the first delay time, so that the first delay time sent to the input device is more accurate, and accuracy of the delay time $T_1$ of the first output device in the device delay control list is improved.

It should be understood that, in this application, only the first output device is used as an example to describe how the output device determines the first delay time. The second output device and any other output device may determine the delay time of the data packet according to the method of the first output device. Details are not described herein again.

Optionally, the method further includes: The input device obtains an identifier of a third output device, determines a delay time of the third output device, and adds the identifier of the third output device and the delay time of the third output device to the device delay control list.

Optionally, the method further includes: The input device deletes the identifier of the third output device and the delay time of the third output device from the device delay control list when the third output device disconnects from the input device.

Therefore, the input device may dynamically update the device delay control list based on whether the input device is connected to the output device, to avoid occupying a storage resource of the output device.

Optionally, the method further includes: receiving the data and first indication information that are sent by the input device, where the first indication information is used to indicate the second output device to output the data during a time T after receiving the data; and outputting the data after the time T.

Specifically, the input device determines a time difference T between the delay time $T_1$ of the first output device and the delay time $T_2$ of the second output device, where T > 0. The input device sends the RTP data to the first output device and the second output device simultaneously. However, when the input device sends the RTP data to the second output device, the first indication information is further included. The first indication information is used to indicate the second output device to output the data during the time T after receiving the data. After receiving the data and the first indication information that are sent by the input device, the second output device outputs the data after the time T based on the first indication information, so that times for the first output device and the second output device to output the data are the same.

The foregoing describes in detail the resource request method in embodiments of this application with reference to FIG. 1 to FIG. 4. The following describes in detail the communication apparatus in embodiments of this application with reference to FIG. 5 to FIG. 7.

FIG. 5 is a schematic block diagram of an input device 400 according to an embodiment of this application. The device 400 may correspond to the input device described in the method 200, or may be a chip or a component applied to the input device. In addition, modules or units in the device 400 are separately configured to perform actions or processing processes performed by the input device in the method 200 and the method 300.

As shown in FIG. 5, the device 400 may include a processing unit 410 and a transceiver unit 420. The transceiver unit 420 is configured to specifically send or receive a signal under driving by the processing unit 310.

The processing unit 410 is configured to determine a delay time $T_1$ of a first output device and a delay time $T_2$ of a second output device based on a device delay control list, where the device delay control list includes an identifier of an output device and a delay time that is of the output device and that is associated with the identifier of the output device.

The transceiver unit 420 is configured to send the RTP data to the first output device and the second output device based on the $T_1$ and the $T_2$, so that times for the first output device and the second output device to output the data are the same.

When sending RTP data to an output device, an input device provided in this application determines a delay time of a first output device and a delay time of a second output device based on a device delay control list, and sends the RTP data to the first output device and the second output device based on the delay time of the first output device and the delay time of the second output device, so that times for the first output device and the second output device to output the data are the same. The times for the first output device and the second output device to output the data are controlled, so that the first output device and the second output device can output the data simultaneously. This does not degrade output quality of the output device, and improves user experience.

It should be understood that for a specific process in which the units in the device 400 perform the foregoing corresponding steps, refer to the foregoing descriptions related to the input device with reference to the method 200 and the method 300 and the related embodiments in FIG. 2 and FIG. 3. For brevity, details are not described herein again.

Optionally, the transceiver unit 420 may include a receiving unit (module) and a sending unit (module), which are configured to perform steps of receiving and sending information by the input device in the embodiments of the method 200 and the method 300 and the embodiments shown in FIG. 2, FIG. 3, and FIG. 4.

FIG. 6 is a schematic block diagram of an output device 500 according to an embodiment of this application. The device 500 may correspond to the input device described in the method 200, or may be a chip or a component applied to the input device. In addition, modules or units in the device 500 are separately configured to perform actions or processing processes performed by the input device in the method 200.

As shown in FIG. 5, the device 500 may include a transceiver unit 510.

The transceiver unit 510 is configured to receive data sent by a first input device. The transceiver unit 510 is further configured to send a first Real-time Transport Control Protocol reception report RTCP RR to the first input device. The first RTCP RR includes a first delay time, and the first delay time is used for the first input device to determine a time for sending RTP data to the first output device.

Optionally, the output device 500 further includes a processing unit 520. The processing unit 520 is configured to determine the first delay time. The processor is specifically configured to: collect statistics on delay times of a plurality of pieces of data of the first output device within a preset time; and obtain an average value of the delay times of the plurality of pieces of data, to obtain the first delay time.

Optionally, the output device 500 further includes an output unit 530. The transceiver unit 510 is configured to receive the data and first indication information that are sent by the input device. The first indication information is used to indicate the second output device to output the data during a time T after receiving the data. The output unit 530 is configured to output the data after the time T.

The transceiver unit 510 is configured to specifically send or receive a signal under driving by the processing unit 520.

It should be understood that for a specific process in which the units in the device 500 perform the foregoing corresponding steps, refer to the foregoing descriptions related to the input device with reference to the method 200 and the method 300 and the related embodiments in FIG. 2, FIG. 3, and FIG. 4. For brevity, details are not described herein again.

Optionally, the transceiver unit 410 may include a receiving unit (module) and a sending unit (module), which are configured to perform steps of receiving and sending information by the input device in the embodiments of the method 200 and the method 300 and the embodiments shown in FIG. 2, FIG. 3, and FIG. 4.

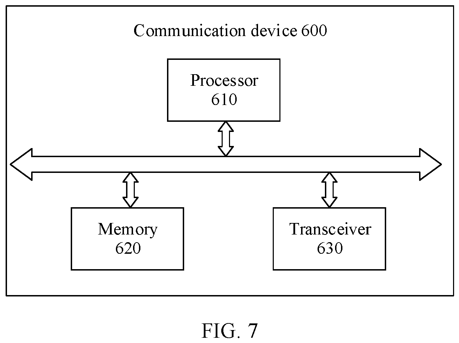

FIG. 7 is a schematic block diagram of a communication device according to an embodiment of this application. It should be understood that the communication device may be the foregoing input device and the foregoing output device. A communication device 600 shown in FIG. 7 may be configured to perform steps corresponding to the steps performed by the input device and the output device in the method 200 in FIG. 2 and the method 300 in FIG. 3. The communication device embodiment and the method embodiment correspond to each other. For similar descriptions, refer to the method embodiment. The communication device 600 includes a processor 610, a memory 620, and a transceiver 630. The processor 610, the memory 620, and the transceiver 630 are in communication connection. The memory 620 stores instructions. The processor 610 is configured to execute the instructions stored in the memory 620. The transceiver 630 is configured to specifically send or receive a signal under driving by the processor 610.

It should be further understood that division of units in the apparatus is merely logical function division. During actual implementation, all or some of the units may be integrated into one physical entity or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, the units may be separately disposed processing elements, or may be integrated into a chip of the apparatus for implementation. In addition, the units may be stored in a memory in a program form, and is invoked by a processing element of the apparatus to perform functions of the units. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

In an example, a unit in any one of the foregoing apparatuses may be one or more integrated circuits configured to implement the foregoing method, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these integrated circuit forms. For another example, when the units in the apparatus may be implemented in a form of scheduling a program by the processing element, the processing element may be a general purpose processor, for example, a central processing unit (central processing unit, CPU) or another processor that can invoke the program. For another example, the units may be integrated together and implemented in a form of a system-on-a-chip (system-on-a-chip, SOC).

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memories, RAMs) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

An embodiment of this application further provides a system. The system includes the foregoing input device and the foregoing output device.

An embodiment of this application further provides a computer-readable medium, configured to store computer program code. The computer program includes instructions used to perform the distributed data transmission method 200 in embodiments of this application. The readable medium may be a read-only memory (read-only memory, ROM) or a random access memory (random access memory, RAM). This is not limited in this embodiment of this application.

This application further provides a computer program product. The computer program product includes instructions, and when the instructions are executed, the input device and the output device are enabled to respectively perform operations corresponding to the input device and the output device in the foregoing method.

An embodiment of this application further provides a system chip. The system chip includes a processing unit and a communication unit. The processing unit may be, for example, a processor, and the communication unit may be, for example, an input/output interface, a pin, or a circuit. The processing unit may execute computer instructions, so that a chip in the communication apparatus performs any distributed data transmission method provided in the foregoing embodiments of this application.

Optionally, any device provided in embodiments of this application may include the system chip.

Optionally, the computer instructions are stored in a storage unit.

Optionally, the storage unit is a storage unit in the chip, for example, a register or a cache. The storage unit may further be a storage unit, such as a ROM, another type of static storage device that can store static information and instructions, or a RAM, that is outside the chip and that is in the terminal. The processor mentioned in any of the foregoing descriptions may be a CPU, a microprocessor, an ASIC, or one or more integrated circuits for controlling program execution of the foregoing resource request method. The processing unit and the storage unit may be decoupled, are separately disposed on different physical devices, and are connected in a wired or wireless manner to implement respective functions of the processing unit and the storage unit, to support the system chip in implementing various functions in the foregoing embodiments. Alternatively, the processing unit and the memory may be coupled to a same device.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memories, RAMs) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In this application, names may be assigned to various objects such as messages/ information/devices/network elements/systems/apparatuses/actions/operations/procedures/concepts. It can be understood that the specific names do not constitute a limitation on the related objects. The assigned names may vary with factors such as scenarios, contexts, or usage habits. Understanding of technical meanings of technical terms in this application should be determined mainly based on functions and technical effects embodied/performed by the technical terms in the technical solutions.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit.

When the functions are implemented in the form of a software function unit and sold or used as an independent product, the functions may be stored in a computer-readable storage medium. Based on this understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device) to perform all or some of the steps of the methods described in embodiments of this application. The foregoing storage medium includes a USB flash drive, a removable hard disk, a read-only memory (read-only memory, ROM), and a random access memory.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A distributed data transmission method, wherein the method is performed by an input device, and comprises:

determining a delay time $T_1$ of a first output device and a delay time $T_2$ of a second output device based on a device delay control list, wherein the device delay control list comprises an identifier of an output device and a delay time that is of the output device and that is associated with the identifier of the output device; and
separately sending Real-time Transport Protocol RTP data to the first output device and the second output device based on the $T_1$ and the $T_2$, wherein the RTP data sent to the first output device comprises a timestamp indicating when the input device sends the RTP data to the first output device, and the RTP data sent to the second output device comprises a timestamp indicating when the input device sends the RTP data to the second output device.

2. The method according to claim 1, wherein the sending RTP data to the first output device and the second output device based on the $T_1$ and the $T_2$ comprises:

determining a time difference T between the T1 and the T2 according to a formula (1), wherein

$$T = T_1 - T_2, T > 0 \qquad (1);$$

and
after sending the RTP data to the first output device, sending the RTP data to the second output device after the time T.

3. The method according to claim 1, wherein the sending RTP data to the first output device and the second output device based on the $T_1$ and the $T_2$ comprises:

determining a time difference T between the T1 and the T2 according to a formula (2), wherein

$$T = T_1 - T_2, T > 0 \qquad (2);$$

and
sending the RTP data to the first output device and the second output device simultaneously, wherein when the RTP data is sent to the second output device, first indication information is further comprised, and the first indication information is used to indicate the second output device to output the data during the time T after receiving the data.

4. The method according to any one of claims 1 to 3, wherein the method further comprises:

receiving a first Real-time Transport Control Protocol reception report RTCP RR sent by the first output device, wherein the first RTCP RR comprises a first delay time;
receiving a second Real-time Transport Control Protocol reception report RTCP RR sent by the second output device, wherein the second RTCP RR comprises a second delay time; and
updating the device delay control list based on the first delay time and the second delay time.

5. The method according to claim 4, wherein the updating the device delay control list based on the first delay time and the second delay time comprises:

collecting statistics on a plurality of the first delay times and a plurality of the second delay times within a preset time;
obtaining an average value $\overline{T}'$ of the plurality of the first delay times;
obtaining an average value $\overline{T}''$ of the plurality of the second delay times; and
updating the delay time $T_1$ of the first output device and the delay time $T_2$ of the second output device that are in the device delay control list based on the $\overline{T}'$ and the $\overline{T}''$.

6. The method according to claim 4, wherein the first delay time is an average value of delay times that are collected by the first output device and that are of a plurality of pieces of data of the first output device within a preset time, and the second delay time is an average value of delay times that are collected by the second output device and that are of a plurality of pieces of data of the second output device within the preset time.

7. A distributed data transmission method, wherein the method is performed by a first output device, and comprises:

receiving RTP data sent by an input device;
determining a first delay time based on the RTP data; and

sending a first Real-time Transport Control Protocol reception report RTCP RR to the input device, wherein the first RTCP RR comprises the first delay time, and the first delay time is used for the input device to determine a time for sending the RTP data to the first output device.

8. The method according to claim 7, wherein the method further comprises determining the first delay time, and the determining the first delay time comprises:

collecting statistics on delay times of a plurality of pieces of data of the first output device within a preset time; and obtaining an average value of the delay times of the plurality of pieces of data, to obtain the first delay time.

9. The method according to claim 7 or 8, wherein the method further comprises:

receiving the data and first indication information that are sent by the input device, wherein the first indication information is used to indicate the second output device to output the data during a time T after receiving the data; and outputting the data after the time T.

10. An input device, comprising:

a processor, configured to determine a delay time $T_1$ of a first output device and a delay time $T_2$ of a second output device based on a device delay control list, wherein the device delay control list comprises an identifier of an output device and a delay time that is of the output device and that is associated with the identifier of the output device; and a transceiver, configured to send RTP data to the first output device and the second output device based on the $T_1$ and the $T_2$, wherein the RTP data sent to the first output device comprises a timestamp indicating when the input device sends the RTP data to the first output device, and the RTP data sent to the second output device comprises a timestamp indicating when the input device sends the RTP data to the second output device.

11. The input device according to claim 10, wherein the transceiver is specifically configured to:

determine a time difference T between the T1 and the T2 according to a formula (3), wherein

$$T = T_1 - T_2, T > 0 \qquad (3);$$

and after sending the RTP data to the first output device, send the RTP data to the second output device after the time T.

12. The input device according to claim 10, wherein the transceiver is specifically configured to:

determine a time difference T between the T1 and the T2 according to a formula (4), wherein

$$T = T_1 - T_2, T > 0 \qquad (4);$$

and send the RTP data to the first output device and the second output device simultaneously, wherein when the RTP data is sent to the second output device, first indication information is further comprised, and the first indication information is used to indicate the second output device to output the data during the time T after receiving the data.

13. The input device according to any one of claims 10 to 12, wherein the transceiver is further configured to:

receive a first Real-time Transport Control Protocol reception report RTCP RR sent by the first output device, wherein the first RTCP RR comprises a first delay time; and

receive a second Real-time Transport Control Protocol reception report RTCP RR sent by the second output device, wherein the second RTCP RR comprises a second delay time; and

the processor is further configured to update the device delay control list based on the first delay time and the second delay time.

14. The input device according to claim 13, wherein the processor is specifically configured to:

collect statistics on a plurality of the first delay times and a plurality of the second delay times within a preset time;

obtain an average value $\overline{T}'$ of the plurality of the first delay times;

obtain an average value $\overline{T}''$ of the plurality of the second delay times; and

update the delay time $T_1$ of the first output device and the delay time $T_2$ of the second output device that are in the device delay control list based on the $\overline{T}'$ and the $\overline{T}''$.

15. The input device according to claim 13, wherein the first delay time is an average value of delay times that are collected by the first output device and that are of a plurality of pieces of data of the first output device within the preset time, and the second delay time is an average value of delay times that are collected by the second output device and that are of a plurality of pieces of data of the second output device within the preset time.

16. An output device, comprising:

a transceiver, configured to receive RTP data sent by a first input device; and

a processor, configured to determine a first delay time based on the RTP data; wherein

the transceiver is further configured to send a first Real-time Transport Control Protocol reception report RTCP RR to the first input device, wherein the first RTCP RR comprises the first delay time, and the first delay time is used for the first input device to determine a time for sending the RTP data to the first output device.

17. The output device according to claim 16, wherein the output device further comprises a processor, wherein

the processor is configured to determine the first delay time, and

the processor is specifically configured to:

collect statistics on delay times of a plurality of pieces of data of the first output device within a preset time; and

obtain an average value of the delay times of the plurality of pieces of data, to obtain the first delay time.

18. The method according to claim 16 or 17, wherein the transceiver is further configured to:

receive data sent by an input device, wherein the data comprises first indication information, and the first indication information is used to indicate the second output device to output the data during a time T after receiving the data; and

output the data after the time T based on indication of the first indication information.

19. A distributed data transmission system, wherein the system comprises the input device according to any one of claims 10 to 15 and the output device according to any one of claims 16 to 18.

20. A communication apparatus, wherein the apparatus comprises at least one processor, and the at least one processor is coupled to at least one memory; and

the at least one processor is configured to execute a computer program or instructions stored in the at least one memory, so that the apparatus is enabled to perform the method according to any one of claims 1 to 6 or the method according to any one of claims 7 to 9.

21. A computer-readable storage medium, wherein the computer-readable storage medium stores a computer program or instructions, and when a computer reads and executes the computer program or the instructions, the computer is enabled to perform the method according to any one of claims 1 to 6 or the method according to any one of claims 7 to 9.

22. A chip, comprising: a processor, configured to invoke a computer program from a memory and run the computer program, so that a communication device on which the chip is installed is enabled to perform the method according to any one of claims 1 to 6 or the method according to any one of claims 7 to 9.

100

Input
device 110

Output
device 120

Output
device 130

FIG. 1

200

| Input device | First output device | Second output device |

S210: Determine a delay time $T_1$ of the first output device and a delay time $T_2$ of the second output device based on a device delay control list

S220: Send data to the first output device and the second output device based on the T1 and the T2

S230: Receive and output the data

S240: Receive and output the data

FIG. 2

300

| Input device | First output device | Second output device |
|---|---|---|

S310: Send a first Real-time Transport Control Protocol reception report RTCP RR

S320: Receive the first Real-time Transport Control Protocol reception report RTCP RR

S330: Send a second Real-time Transport Control Protocol reception report RTCP RR

S340: Receive the second Real-time Transport Control Protocol reception report RTCP RR

S350: Update a device delay control list based on a first delay time and a second delay time

S360: Determine a delay time $T_1$ of the first output device and a delay time $T_2$ of the second output device based on the device delay control list

S370: Send data to the first output device and the second output device based on the T1 and the T2

S380: Receive and output the data

S390: Receive and output the data

FIG. 3

FIG. 4

FIG. 5

FIG. 6

Communication device 600

Processor
610

Memory
620

Transceiver
630

FIG. 7

### INTERNATIONAL SEARCH REPORT

| International application No. |
|---|
| **PCT/CN2021/079148** |

| A. | CLASSIFICATION OF SUBJECT MATTER |
|---|---|

H04L 29/06(2006.01)i

According to International Patent Classification (IPC) or to both national classification and IPC

| B. | FIELDS SEARCHED |
|---|---|

Minimum documentation searched (classification system followed by classification symbols)

H04L; H04N

Documentation searched other than minimum documentation to the extent that such documents are included in the fields searched

Electronic data base consulted during the international search (name of data base and, where practicable, search terms used)

CNPAT, CNKI, WPI, EPODOC: 实时, 传输, 控制, 协议, 直播, 播放, 视频, 音频, 音画, 声音, 同步, 第二, 多, 延迟, 延时, 偏移, 位移, 时间, 时差, RTP, RTCP, video, audio, voice, sound, play+, sync+, second, multi+, plural+, delay+, shift+

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 111935525 A (SHENZHEN TRANSSION HOLDINGS CO., LTD.) 13 November 2020 (2020-11-13) <br> claim, paragraphs [0006]-[0027], [0074]-[0094] | 1-2, 4-8, 10-11, 13-17, 19-22 |
| PY | CN 111935525 A (SHENZHEN TRANSSION HOLDINGS CO., LTD.) 13 November 2020 (2020-11-13) <br> claim, paragraphs [0006]-[0027], [0074]-[0094] | 3, 9, 12, 18 |
| X | CN 107682715 A (TENCENT TECHNOLOGY SHENZHEN CO., LTD.) 09 February 2018 (2018-02-09) <br> description, paragraphs [0006]-[0022], [0035]-[0076] | 1-2, 4-8, 10-11, 13-17, 19-22 |
| Y | CN 107682715 A (TENCENT TECHNOLOGY SHENZHEN CO., LTD.) 09 February 2018 (2018-02-09) <br> description, paragraphs [0006]-[0022], [0035]-[0076] | 3, 9, 12, 18 |
| Y | CN 1206536 A (SIEMENS INFORMATION COMMUNICATIONS NETWORK INC.) 27 January 1999 (1999-01-27) <br> claim 1 | 3, 9, 12, 18 |
| A | CN 102742249 A (KONINKLIJKE KPN N.V. et al.) 17 October 2012 (2012-10-17) <br> entire document | 1-22 |

☑ Further documents are listed in the continuation of Box C.     ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 May 2021** | **27 May 2021** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2021/079148** |

**C.    DOCUMENTS CONSIDERED TO BE RELEVANT**

| Category* | Citation of document, with indication, where appropriate, of the relevant passages | Relevant to claim No. |
|---|---|---|
| A | US 2008259966 A1 (CISCO TECHNOLOGY, INC.) 23 October 2008 (2008-10-23)<br>    entire document | 1-22 |

Form PCT/ISA/210 (second sheet) (January 2015)

## INTERNATIONAL SEARCH REPORT
### Information on patent family members

International application No.

**PCT/CN2021/079148**

| Patent document cited in search report | | | Publication date (day/month/year) | Patent family member(s) | | | Publication date (day/month/year) |
|---|---|---|---|---|---|---|---|
| CN | 111935525 | A | 13 November 2020 | None | | | |
| CN | 107682715 | A | 09 February 2018 | None | | | |
| CN | 1206536 | A | 27 January 1999 | JP | H10512736 | A | 02 December 1998 |
| | | | | EP | 0882359 | A2 | 09 December 1998 |
| | | | | US | 5570372 | A | 29 October 1996 |
| | | | | WO | 9717798 | A2 | 15 May 1997 |
| CN | 102742249 | A | 17 October 2012 | EP | 3627798 | A1 | 25 March 2020 |
| | | | | JP | 2013518495 | A | 20 May 2013 |
| | | | | WO | 2011092244 | A1 | 04 August 2011 |
| | | | | EP | 2529531 | A1 | 05 December 2012 |
| | | | | KR | 20120103750 | A | 19 September 2012 |
| | | | | US | 2012324520 | A1 | 20 December 2012 |
| US | 2008259966 | A1 | 23 October 2008 | None | | | |

Form PCT/ISA/210 (patent family annex) (January 2015)

**REFERENCES CITED IN THE DESCRIPTION**

**Patent documents cited in the description**

- CN 202010148510